# EUROPEAN PATENT APPLICATION

(11) **EP 3 081 611 A1**
(43) Date of publication of application: **19.10.2016**
(21) Application number: 13898930.6
(22) Date of filing: 11.12.2013
(51) Int. Cl.: C09J 7/02, A01G 9/12, C09J 11/04, C09J 11/08, C09J 153/02

(54) **SELF-ADHESION-TYPE ADHESIVE TAPE**

(71) Applicant: Nichiban Co. Ltd., Tokyo 112-8663 (JP)
(72) Inventor: MORI, Yuko, Tokyo 112-8663 (JP); TAKIMOTO, Tomoyuki, Tokyo 112-8663 (JP); SATO, Masanori, Tokyo 112-8663 (JP)
(74) Representative: Klingseisen, Franz
(86) International application number: PCT/JP2013/083156
(87) International publication number: WO 2015/087405

(57) **Abstract**

The purpose of the present invention is to improve a self-adhesion-type adhesive tape for banding branches, stems, vines, young shoots and the like of plants.

A self-adhesion-type adhesive tape is produced, which comprises a tape-shaped backing and an adhesive agent applied onto one surface of the backing.

An elastomer that constitutes the adhesive agent is prepared by mixing 10 to 80% by weight of a styrene-isoprene-styrene block polymer having a styrene content of 14 to 19% by weight inclusive with 20 to 90% by weight of a styrene-isoprene-styrene block polymer having a styrene content of 25 to 50% by weight inclusive.

The self-adhesiveness retention property, i.e., such a property that, when parts of the adhesive agent on the self-adhesion-type adhesive tape are bounded to each other so as to form an A-shaped loop and a weight is suspended on the loop, the state of the suspension can be retained, is examined.

The self-adhesion-type adhesive tape can achieve a sufficient level of self-adhesion property both in an environment having a temperature of 23°C and an environment having a temperature of 40°C.

## Description

### FIELD OF THE INVENTION

The present invention relates to a self-adhesion-type adhesive tape, more particularly to an adhesive tape for guiding and banding vines of plants such as grape or tomato under cultivation to props or shelves.

### BACKGROUND INFORMATION

In general, when cultivating plants, for example, fruits such as apple, pear or grape, vegetables such as cucumber, tomato or eggplant or ornamental plants such as flowers, it is necessary to take measures to prevent branches or vines from breaking or being damaged by wind or its weight during cultivation. It is also necessary to adjust the direction of growth of the plants for well-balanced growth so as to keep the plants in healthy state, make the plants to be easily harvested, or the like. For such purposes, it has been practiced to fasten the vines or stems of plants by binding them to props or shelves with wires coated with plastics.

The banding operation is itself simple, but it is required to conduct a lot of banding works in a short period of time during the growth of plants and this operation need a great deal of labor.

Under such circumstances, the applicants have proposed a banding method using an adhesive tape. In this method, the banding operation is carried out by putting adhesive faces of an adhesive tape together and sticking them to each other, and no wire is used unlike the above conventional methods, and therefore this method is characterized by its high safety (Patent Document 1).

Further, since the adhesive faces of an adhesive tape are put together as above, the adhesive is constructed so that a self-adhesion force as observed when the adhesive faces stick together is larger than the adhesion force of the adhesive (Patent Document 2).

Since the above various types of cultivation are usually conducted on bare field, adhesion properties may be considered on the basis of, as an average temperature, the level of around 23°C as ordinary temperature. However, the cultivation may be conducted in houses such as vinyl greenhouses in many cases. The inside temperature of houses may often be high, and at such high temperature range, it is required to set as an average temperature a level of around 40°C. In such instance, even the ones being effective at the above ordinary temperature can hardly provide sufficient banding conditions at such a high temperature range.

### PRIOR ART DOCUMENTS

### PATENT DOCUMENTS

Patent Document 1: JP-UM-1991-003751 A
Patent Document 2: JP-2004-161962 A

### SUMMARY OF THE INVENTION

### PROBLEMS THAT THE INVENTION IS TO SOLVE

It is an object of the present invention to provide an adhesive tape by which stems, vines, branches, new treetops or the like of plants can be banded to props or the like, and the banding condition with this tape can be kept both at an ordinary temperature ( 23°C ) and a high temperature (40°C).

The present invention further provides the ones which do not adversely affect the growth of plants by banding and can provide reliable banding and excellent banding operability.

### MEANS OF SOLVING THE PROBLEMS

The present invention provides a self-adhesion-type adhesive tape which comprises a tape-shaped backing and an adhesive layer formed by applying an adhesive on one surface of the substrate. The elastomer of the adhesive contains a mixture of 10 to 80 wt% of a styzene-isoprene-styrene block polymer having a styrene content of at least 14 wt% and at most 19 wt%, and 20 to 90 wt% of a styrene-isoprene-styrene block polymer having a styrene content of at least 25 wt% and at most 50 wt%. The self-adhesion-type adhesive tape is formed to satisfy the following (a) and (b) at the same time.
(a) a self-adhesion-type adhesive tape having a width of 10 mm and a length of 100 mm is prepared, a self-adhesion-type adhesive tape with the same structure as the above self-adhesion-type adhesive tape having a length of 60 mm is stuck on the central 60 mm adhesive portion to make the portion non-adhesive while both end portions of 20 mm are left to be adhesive to prepare a test piece;
   both adhesive end portions of 20 mm of the test piece are put together and stuck to each other to form a loop, a metallic lifting bar having a diameter of 15 mm is inserted into the loop to lift up the loop; and
   a weight of 1,000 g is suspended from the loop, the loop is kept for 24 hours under the conditions of a temperature of 23°C and a relative humidity of 50%, and the number of test pieces from which the weight does not fall is at least 1/2, and
(b) a weight of 500 g is suspended from the loop of the above (a), the loop is kept for 24 hours under the conditions of a temperature of 40°C and a relative humidity of 75%, and the number of test pieces from which the weight does not fall is at least 1/2.

Further, the selt-adhesion--type adhesive tape is constructed to have a SUS-adhesion force of less than 2.0 N/10 mm, a probe tack of less than 2.0 N/5 mmφ, and a self-adhesion force of at least 10.0 N/10 mm.

### EFFECTS OF THE INVENTION

By putting the adhesive portions of the self-adhesion-type adhesive tape together and sticking them to each other, stems, vines, branches, new treetops or the like of plants can be easily fastened to props, shelves or the like. And, banding conditions can be kept in not only a case under ordinary temperature environment such as cultivation on bare field, but also a case under high temperature environment such as cultivation in vinyl greenhouse.

Further, since the adhesion force of the adhesive tape is low as compared with other adherents, it does not damage stems, branches, new treetops or the like of plants and is less likely to adversely affect the growth of plants.

### BRIEF DESCRIPTION OF THE DRAWINGS

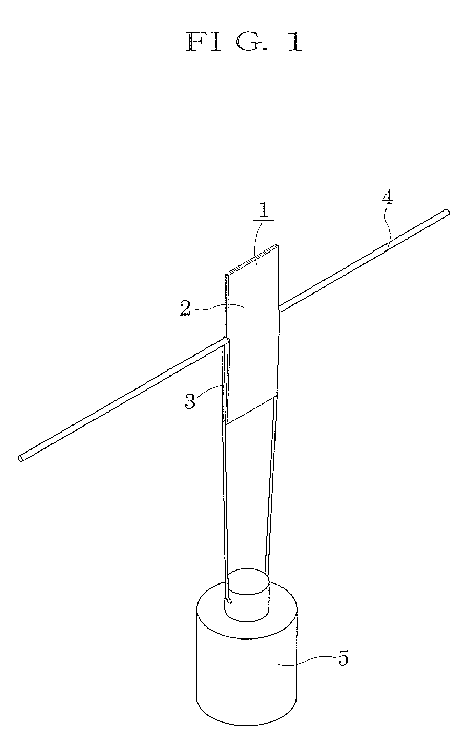

Fig.1 is an explanatory view showing a method for measuring a self-adhesion retention property of a self-adhesion-type adhesive tape.

### DETAILED DESCRIPTION OF THE PREFERRED EMBODIMENTS

As the backing for the self-adhesion-type adhesive tape of the present invention, a porous material formed by a fibrous material such as a craft paper, a crepe paper or a Japanese paper, a plastic film made of a polyolefin type resin, a polyester type resin, a vinyl chloride type resin or a polyimide type resin may appropriately be used.

When the porous material is used, an appropriate treatment may be carried out by using an impregnating agent, a back surface-treating agent, etc. in order to adjust the strength, weather resistance, rigidity, etc. The basis weight and thickness of the porous material may be appropriately chosen depending on the use and is not particularly limited.

Other than the above-mentioned ones, it is preferred in view of environment to use a biodegradable or photodegradable plastic film as the plastic film. Further, a plurality of the above-mentioned ones may be used in combination, for example, plastic films may be laminated or a plastic film, a porous material, etc. may be laminated. Moreover, as the case requires, a porous plastic film may be used.

The plastic film may be subjected to a surface treatment such as a corona treatment, a plasma treatment or a primer treatment on one or both surfaces in order to improve the adherence with an adhesive which forms the hereinafter-mentioned adhesive layer. The backing using the plastic film may be used without particularly limiting the basis weight of the backing.

An adhesive is applied to one surface of the backing to form an adhesive layer. As the elastomer of the adhesive forming the adhesive layer, the following ones may be used.

The elastomer contains a mixture of a low styrene polymer (a low styrene SIS) which is a styrene-isoprene-styrene block polymer (SIS) having a styrene content of at least 14 wt% and at most 19 wt%, and a high styrene polymer (a high styrene SIS) which is a styrene-isoprene-styrene block polymer (SIS) having a styrene content of at least 25 wt% and at most 50 wt%. The styrene content of the high styrene polymer is preferably at least 30 wt% and at most 50 wt%.

As the proportion of the mixture of the low styrene polymer and the high styrene polymer, the low styrene polymer is 10 to 80 wt% and the high styrene polymer is 20 to 90 wt%.

Preferably, the low styrene polymer is 20 to 70 wt% and the high styrene polymer is 30 to 80 wt%.

If the low styrene polymer content is less than 10 wt%, the after-mentioned self-adhesion retention property tends to be low, and if it exceeds 80 wt%, the self-adhesion retention property tends to be low.

The adhesive contains the above elastomer and a tackifier resin and a filler, and as the case requires, various additives such as a softener, a plasticizer, an ultraviolet absorber or an antioxidant may be incorporated.

The tackifier resin includes natural products or derivatives thereof such as rosin type resins or terpene type resins, and synthetic resins such as aliphatic type petroleum resins, alicyclic type petroleum resins, aromatic type petroleum resins, coumarone-indene resins, styrene type resins, phenol type resins or xylene resins.

The tackifier resin is usually used in an amount of 4 to 150 parts by weight, preferably 10 to 100 parts by weight, more preferably 15 to 70 parts by weight on the basis of 100 parts by weight of the elastomer. By incorporating the Tackifier resin, it is possible to impart self- adhesion at ordinary temperature to the adhesive components and contribute to the self-adhesion retention property at ordinary temperature and high temperature.

The filler includes, for example, calcium carbonate, Chinese white (zinc oxide), aluminum silicate, silica, talc, diatomaceous earth, silica sand, pumice powder, slate powder, mica powder, aluminum sol, alumina white, aluminum sulfate, barium sulfate, lithopone, calcium sulfate, molybdenum disulfide, graphite, glass fibers, glass balls, single crystal potassium titanate, carbon fibers, activated Chinese white, zinc oxide, magnesium oxide, basic magnesium carbonate, litharge, red lead, white lead, calcium hydroxide, activated calcium hydroxide, titanium oxide and the like.

Among these fillers, calcium carbonate, Chinese white, silica, titanium oxide and the like are preferred. If these fillers are incorporated, it is possible to impart an appropriate cohesiveness to the adhesive.

The filler preferably has an average particle size of at most 5 µm. In this instance, if small-particle-size fine particles having an average particle size of less than 5 µm are used with a small amount of large-particle-size fine particles having an average particle size of 7 to 125 µm, it becomes possible to adjust the cohesive force and adhesion force in appropriate ranges. Taking the balance of the self-adhesion force and the adhesion force or the like to adherent into consideration, it is desirable to choose large-particle-size fine particles containing, as mixed together, the ones having a particle size of from 70% to 250% of the thickness of the adhesive applied to the backing.

As the large-particle-size fine particles, organic fine particles, inorganic fine particles and a mixture thereof may be used. As the organic fine particles, typical examples include organic type microballoons of a vinylidene chloride type, a phenol resin type, a urea resin type, an epoxy resin type or the like, synthetic resin fine particles of polystyrene, polymethyl methacrylate or the like. As the inorganic fine particles, inorganic microballoons of borosilicate glass or the like, inorganic fillers such as calcium carbonate or silica, and the like may be mentioned.

The filler is contained in an amount of 1 to 230 parts by weight, preferably 75 to 215 parts by weight on the basis of 100 parts by weight of the elastomer. If it is 75 to 215 parts by weight, the after-mentioned SUS-adhesion force, adhesion force of probe tack and self-adhesion force can be adjusted to adequate ranges, resulting in less possibility of prevention of the guiding and banding operation and adverse effects on the growth of plants. Further, if it exceeds 230 parts by weight, it is likely unable to obtain the self-adhesion retention.

When the large-particle-size fine particles are incorporated, the proportion is preferably 0.1 to 5 wt%, more preferably 0.2 to 3 wt%, particularly preferably 0.3 to 2 wt% on the basis of the total amount of the adhesive.

As the softener, a petroleum type softener, a plant type softener, liquid rubber, an adhesion-imparting liquid resin, a synthetic plasticizer or the like may be mentioned. By incorporating the softener, the cohesiveness and self-adhesion properties may be adjusted.

These softeners are selected for use by taking the compatibility with the elastomer components or the like into consideration. When the softener is used as the case requires, it should be used within such a range that will not damage the self-adhesion properties, and it is usually used in an amount of 0 to 200 parts by weight on the basis of 100 parts by weight of the elastomer components. It is often undesirable to use the softener in a case where it is preferred to increase the self-adhesion force and decrease the adhesion force or tackiness to the subject of banding like the case of a plant-leading self-adhesion type adhesive tape for guiding and banding the plants at the time of cultivation.

As the ultraviolet absorber, salicylic acid derivatives, benzophenone type compounds, benzotriazole type compounds, cyanoacrylate type compounds and the like may be mentioned. When the ultraviolet absorber is used, it is usually added in an amount of 0.1 to 5 parts by weight on the basis of 100 parts by weight of the elastomer components.

The antioxidant includes amine type compounds such as naphthylamine type compounds, diphenylamine type compounds and p-phenylenediamine type compounds, mixtures of amine type compounds, quinoline type compounds, hydroquinone type compounds, monophenol type compounds, bisphenol type compounds, tris-phenol type compounds, polyphenol type compounds, thiobisphenol type compounds and the like. The incorporation ratio of the antioxidant is not particularly limited, but it is usually 0.1 to 5 parts by weight, preferably 0.5 to 2 parts by weight on the basis of 100 parts by weight of the elastomer components.

The self-adhesion type adhesive tape is preferably formed to have a SUS-adhesion force of less than 2.0 N/10 mm and a probe tack of less than 2.0 N/5 mmφ. If the SUS-adhesion force is 2.0 N/10 mm or more and the probe tack is 2.0 N/5 mmφ or more, the adhesive tape is more likely to adhere on the subject of banding depending on the subject, such being undesirable.

Further, the self-adhesion force (autohesion) of this self-adhesion type adhesive tape is preferably at least 7.0N/10 mm, more preferably at least 10.0 N/10 mm. If it is at least 10.0 N/10 mm, excellent self-adhesion force can be obtained.

### EXAMPLES

### Example 1

A rubber type adhesive was obtained by dissolving and blending 80 parts by weight of "low styrene SIS (styrene content: 16wt%, Quintac 3433 manufactured by Zeon Corporation)" and 20 parts by weight of "high styrene SIS-3 (styrene content: 48 wt%, Quintac 3390 manufactured by Zeon Corporation)" as elastomers, 115 parts by weight of "calcium carbonate (Super #1500 manufactured by Maruo Calcium Co., Ltd.)" as a filler, 40 parts by weight of "aliphatic petroleum resin (Quinton A-100 manufactured by Zeon Corporation)" and 10 parts by weight of "terpene type resin (YS Resin PX-1150 manufactured by Yasuhara Chemical Co. , Ltd.) as tackifier resins and 0.65 part by weight of "Irganox 1010 manufactured by BASF" as an antioxidant, in a mixed solvent of toluene/n-hexane blended at 50:50.

A polypropylene film having a thickness of 43 µm was subjected to a corona treatment, and then a printing treatment having a primer effect, followed by coating with the above adhesive to a thickness of 20 µm to prepare an adhesive tape having a width of 10 mm.

### Examples 2 to 8 and Comparative Examples 1 to 2

Adhesive tapes were prepared in the same manner as in Example 1 provided that the formulation was changed as indicated in Table 1.

### Examples 9 to 16 and Comparative Examples 3 to 4

Adhesive tapes were prepared in the same manner as in Example 1 provided that the "high styrene SIS-3 (styrene content: 48 wt%)" was changed to "high styrene SIS-2 (styrene content: 30 wt%, Quintac SL-165 manufactured by Zeon Corporation)" and the formulation of respective components was changed as indicated in Table 2.

### Examples 17 to 23 and Comparative Example 5

Adhesive tapes were prepared in the same manner as in Example 1 provided that the content of the "low styrene SIS (styrene content: 16 wt%)" was changed from 80 parts by weight to 50 parts by weight, the content of the "high styrene SIS-3 (styrene content: 48 wt%)" was changed from 20 parts by weight to 50 parts by weight and the incorporated ratio of calcium carbonate was changed as indicated in Table 3.

### Examples 24 to 31 and Comparative Example 6

Adhesive tapes were prepared in the same manner as in Example 1 provided that the content of the "low styrene SIS (styrene content: 16 wt%)" was changed from 80 parts by weight to 50 parts by weight, 20 parts by weight of "high styrene SIS-3 (styrene content: 48 wt%)" was changed to 50 parts by weight of the "high styrene SIS-2 (styrene content: 30 wt%)" and the incorporated ratio of calcium carbonate was changed as indicated in Table 4.

### Examples 32 and 33

Adhesive tapes were prepared in the same manner as in Example 1 provided that the "high styrene SIS-3 (styrene content: 48 wt%)" was changed to "high styrene SIS-1 (styrene content: 25 wt%, Quintac 3460 manufactured by Zeon Corporation) " and the incorporated ratio of respective components were changed as indicated in Table 5.

### Comparative Examples 7 and 8

Adhesive tapes were prepared in the same manner as in Example 1 provided that the elastomer was changed to 100 parts by weight of "low styrene SIS (styrene content: 16 wt%)" and the incorporated ratio of calcium carbonate was changed as indicated in Table 5.

### TESTS

In order to examine the properties and performance of the above Examples and Comparative Examples, the following self-adhesion force test, SUS-adhesion force test, probe tack test, self-adhesion retention property test (23°C, 1, 000 g) and self-adhesion retention property test (40°C, 500 g) were carried out.

### SELF-ADHESION FORCE TEST

Under the conditions of 23°C, 50 %RH, using the tapes of Examples and Comparative Examples (width: 10 mm) as test pieces, the test pieces were laminated with their adhesive sides placed inside so that the coating length would be at least 100 mm, subjected to contact bonding by a roller of 2 kg having a width of 50 mm at a rate of 300 mm/min in one reciprocal motion, and then left for 30 minutes. Then, the test piece was fixed to an Instron type tensile strength tester, and subjected to T-peel test (90° peel test) at a peeling rate of 300 mm/min, and the peeling force (N/10 mm) obtained was measured.

### SUS-ADHESION TEST

Under the conditions at 23°C, 50 %RH, using the tapes of Examples and Comparative Examples (width: 10 mm) as test pieces, the test piece was stuck on the surface of a mirror-finished SUS 304 steel plate and then subjected to contact bonding by a roller of 1 kg having a width of 50 mm in accordance with JIS Z0237. Within 1 minute thereafter, the test piece was peeled at 300 mm/min in a direction at 180° to the test plate, and the peeling force (N/10 mm) obtained was measured.

In respective tables, the indication of "<0.1" in the SUS-adhesion force shows that the measured value was less than the detection limit of the tester.

### PROBE TACK TEST

Under the conditions at 23°C, 50 %RH, using the tapes (width: 10 mm) of Examples and Comparative Examples as test pieces, the test piece was stuck on a weight ring without slack in accordance with ASTM D2979. A cylindrical probe having a diameter of 5 mm was brought into contact with an adhesive face of the test piece for 1.0±0.01 second, with a load of 0.98 ±0.001. N/cm² and a contact rate of 10±0.1 mm/second. Then, a force required to peel off the probe (N/5 mmφ) in a vertical direction from the adhesive face at the same rate as the contact rate was measured.

In the table shown below, the indication "-" in Example 8 and Comparative Example 2 means that when the probe was brought into contact with the test piece, the test piece peeled from the weight ring and it was therefore impossible to conduct measurement.

### TEST FOR SELF-ADHESION RETENTION PROPERTY 23°C, 1,000 g)

An adhesive tape having a width of 10 mm and a length of 100 mm was prepared, an adhesive tape with the same structure as the above adhesive tape having a length of 60 mm was stuck on the central 60 mm adhesive portion to make the portion non-adhesive while both end portions of 20 mm (2) were left to be adhesive to prepare a test piece of an adhesive tape (1). As shown in Fig.1, both adhesive end portions of 20 mm of the test piece (1) were put together and stuck to each other to form a loop (3), and a metallic lifting bar (4) having a diameter of 15 mm was inserted into the loop (3) to lift up the loop (3). A weight (5) of 1,000 g was suspended from the loop (3), the loop (3) was kept for 24 hours under the conditions of a temperature of 23°C and a relative humidity (RH) of 50%, and the falling state of weight in test pieces was observed. The number of the test pieces was 4.

Standard of evaluation:
○: no falling of weight was observed.
Δ: number of weights not falling was at least 2 among 4.
×: all weights fell.

### TEST FOR SELF-ADHESION RETENTION PROPERTY (40°C, 500 g)

A weight of 500 g was suspended from the test piece prepared in the same manner as in the above test for self-adhesion retention property (23°C, 1,000 g), and the conditions were observed after keeping it for 24 hours under the conditions of a temperature of 40°C and a relative humidity (RH) of 75%. The number of the test pieces was 4.

The test conditions of the test for self-adhesion retention property (40°C, 500 g) were tougher than those of the test for self-adhesion retention property (23°C, 1,000 g).

The evaluation standard was the same as in the above test for self-adhesion retention property (23°C, 1,000 g).

### TOTAL EVALUATION

Total evaluation is conducted on the basis of the above respective tests.

The evaluation standard of the total evaluation is mentioned below.
○ (good) : in both of the test for self-adhesion retention property (23°C, 1,000 g) and the test for self-adhesion retention property (40°C, 500 g), the evaluation is "○". Further, as the adhesion properties, the SUS-adhesion force of less than 2.0 N/10 mm, the probe tack of less than 2.0 N/5 mm φ and the self-adhesion force of at least 10.0 N/10 mm are satisfied.
Δ (acceptable): in both of the test for self-adhesion retention property (23°C, 1,000 g) and the test for self-adhesion retention property (40°C, 500 g), the evaluation is "○". However, as the adhesion properties, the SUS-adhesion force of less than 2.0 N/10 mm, the probe tack of less than 2.0 N/5 mm φ and the self-adhesion force of at least 10.0 N/10 mm are not satisfied;
or
in the test for self-adhesion retention property (23°C, 1,000 g), the evaluation is "○", and in the test for self-adhesion retention property (40°C, 500 g), the evaluation is "Δ". Further, as the adhesion properties, the SUS-adhesion force of less than 2.0N/10mm, the probe tack of less than 2.0 N/5 mm φ and the self-adhesion force of at least 10.0 N/10 mm are satisfied.
× (failure): in the test for self-adhesion retention property (40°C, 500 g), the evaluation is "×".

### RESULTS

The results of the above respective tests and the total evaluation based on these results of tests are indicated in Table 1 to Table 5.

### CONSIDERATION

As shown in Table 1, Examples 1 to 8 show good results in the self-adhesion retention property (23°C, 1,000 g) and the self-adhesion retention property (40°C, 500 g) as compared with Comparative Examples 1 and 2. Those of Examples 1 to 7 are particularly preferred.

Examples 9 to 16 as shown in Table 2 show good results in the self-adhesion retention property (23°C, 1,000 g) as compared with Comparative Examples 3 and 4. With respect to the self-adhesion retention property (40°C, 500 g), the result of Example 9 is a little low, but Examples 10 to 16 show good results.

In Examples 17 to 23 as shown in Table 3 show good results in the self-adhesion retention property (40°C, 500 g) as compared with Comparative Example 5. Further, Examples 19 to 23 show excellent evaluation results in the adhesion properties (SUS-adhesion force of less than 2.0 N/10 mm, probe tack of less than 2.0 N/5 mm φ and the self-adhesion force of at least 10.0 N/10 mm).

Examples 24 to 31 as shown in Table 4 show good results in the self-adhesion retention property (23°C, 1,000 g) and the self-adhesion retention property (40°C, 500 g) as compared with Comparative Example 6. Among them, Examples 26 to 31 show preferred results in the adhesion properties as well.

Examples 32 and 33 as shown in Table 5 are a little low in the self-adhesion retention property (40°C, 500 g), but show good results in the self-adhesion retention property (23°C, 1,000 g), and the total evaluations thereof are "acceptable". On the contrary, in Comparative Examples 7, 1, 3 and 8, no satisfactory results can be obtained in the self-adhesion retention property (23°C, 1,000 g) and the self-adhesion retention property (40°C, 500 g).

**Table 1**

| | Ex1 | Ex2 | Ex3 | Ex4 | Ex5 | Ex6 | Ex7 | Ex8 | C.Ex1 | C.Ex2 |
|---|---|---|---|---|---|---|---|---|---|---|
| Low styrene SIS | 80 | 70 | 60 | 50 | 40 | 30 | 20 | 10 | 100 | 0 |
| High styrene SIS-3 | 20 | 30 | 40 | 50 | 60 | 70 | 80 | 90 | 0 | 100 |
| Calcium carbonate | 115 | 115 | 115 | 115 | 115 | 115 | 115 | 115 | 115 | 115 |
| Tackifier resin | 50 | 50 | 50 | 50 | 50 | 50 | 50 | 50 | 50 | 50 |
| Self-adhesion force (N/10 mm) | 12 | 12.1 | 12.3 | 12.8 | 12.5 | 11.7 | 10.1 | 7.5 | 12-8 | 6 |
| SUS-adhesion force (N/10 mm) | 1.4 | 1.1 | 0.9 | 0.8 | 0.8 | 0.2 | <0.1 | <0.1 | 1.5 | <0.1 |
| Probe tack (N/5mm(φ) | 1.1 | 0.9 | 0.8 | 1 | 0.9 | 0.5 | 0.3 | - | 2.3 | - |
| Self-adhesion retention property (23°C, 1kg) | ○ | ○ | ○ | ○ | ○ | ○ | ○ | ○ | × | × |
| Self-adhesion retention property (40°C, 500 g) | ○ | ○ | ○ | ○ | ○ | ○ | ○ | ○ | × | × |
| Total evaluation | ○ | ○ | ○ | ○ | ○ | ○ | ○ | Δ | × | × |

**Table 2**

| | Ex9 | Ex10 | Ex11 | Ex12 | Ex13 | Ex14 | Ex15 | Ex16 | C.Ex3 | C.Ex4 |
|---|---|---|---|---|---|---|---|---|---|---|
| Low styrene SIS | 80 | 70 | 60 | 50 | 40 | 30 | 20 | 10 | 100 | 90 |
| High styrene SIS-2 | 20 | 30 | 40 | 50 | 60 | 70 | 80 | 90 | 0 | 10 |
| Calcium carbonate | 165 | 165 | 165 | 165 | 165 | 165 | 165 | 165 | 165 | 165 |
| tackifier resin | 50 | 50 | 50 | 50 | 50 | 50 | 50 | 50 | 50 | 50 |
| Self-adhesion force (N/10 mm) | 11.1 | 11.7 | 11.4 | 10.8 | 11.8 8 | 11.5 | 11.8 | 12.1 | 10.4 | 10.9 |
| SUS-adhesion force (N/10 mm) | 0.2 | 0.2 | 0.1 | 0.1 | p.1 | 0.1 | 0.1 | 0.1 | 0.4 | 0.3 |
| Probe tack (N/5mmφ) | 0.5 | 0.6 | 0.4 | 0.3 | 0.3 | 0.2 | 0.4 | 0.3 | 0.5 | 0.5 |
| Self-adhesion retention property (23°C, 1kg) | ○ | ○ | ○ | ○ | ○ | ○ | ○ | ○ | × | × |
| Self-adhesion retention property (40°C, 500 g) | Δ | ○ | ○ | ○ | ○ | ○ | ○ | ○ | × | × |
| Total evaluation | Δ | ○ | ○ | ○ | ○ | ○ | ○ | ○ | × | × |

**Table 3**

| | Ex17 | Ex18 | Ex19 | Ex20 | Ex21 | Ex22 | Ex23 | C.Ex5 |
|---|---|---|---|---|---|---|---|---|
| Low styrene SIS | 50 | 50 | 50 | 50 | 50 | 50 | 50 | 50 |
| High styrene SIS-3 | 50 | 50 | 50 | 50 | 50 | 50 | 50 | 50 |
| Calcium carbonate | 35 | 65 | 90 | 115 | 165 | 190 | 215 | 240 |
| Tackifier resin | 50 | 50 | 50 | 50 | 50 | 50 | 50 | 50 |
| Self-adhesion force (N/10 mm) | 13.5 | 13.2 | 13.9 | 12.8 | 11.9 | 10.9 | 12 | 9.3 |
| SUS-adhesion force (N/10 mm) | 3.09 | L | 0.7 | 0.8 | 0.1 | <0.1 | <0.1 | <0.1 |
| Probe tack (N/5mm φ) | 1.28 | 1.5 | 0.8 | 1 | 0.6 | 0.3 | 0.3 | 0.2 |
| Self-adhesion retention property (23°C, 1kg) | ○ | ○ | ○ | ○ | ○ | ○ | ○ | ○ |
| Self-adhesion retention property (40°C, 500 g) | ○ | ○ | ○ | ○ | ○ | ○ | ○ | × |
| Total evaluation | Δ | Δ | ○ | ○ | ○ | ○ | ○ | × |

**Table 4**

| | Ex24 | Ex25 | Ex26 | Ex27 | Ex28 | Ex29 | Ex30 | Ex31 | C.Ex6 |
|---|---|---|---|---|---|---|---|---|---|
| Low styrene SIS | 50 | 50 | 50 | 50 | 50 | 50 | 50 | 50 | 50 |
| High styrene SIS-2 | 50 | 50 | 50 | 50 | 50 | 50 | 50 | 50 | 50 |
| Calcium carbonate | 35 | 65 | 75 | 90 | 115 | 165 | 190 | 215 | 265 |
| Tackifier resin | 50 | 50 | 50 | 50 | 50 | 50 | 50 | 50 | 50 |
| Self-adhesion force (N/10 mm) | 11.9 | 2.7 | 12.7 | 12.2 | 12.37 | 10.8 | 11.8 | 11 | 9.73 |
| SUS-adhesion force (N/10 mm) | 2.4 | 2.1 | 1.9 | 1.6 | 0.5 | 0.1 | 0.1 | <0.1 | <0.1 |
| Probe tack (N/5mmφ) | 5.44 | 1.9 | 1.7 | 1.2 | 0.9 | 0.3 | 0.38 | 0.2 | 0.15 |
| Self-adhesion retention property (23°C, 1kg) | ○ | ○ | ○ | ○ | ○ | ○ | ○ | ○ | Δ |
| Self-adhesion retention property (40°C, 500 g) | ○ | ○ | ○ | ○ | ○ | ○ | ○ | ○ | × |
| Total evaluation | Δ | Δ | ○ | ○ | ○ | ○ | ○ | ○ | × |

**Table 5**

| | Ex32 | Ex33 | C.Ex7 | C.Ex1 | C.Ex3 | C.Ex8 |
|---|---|---|---|---|---|---|
| Low styrene SIS | 50 | 80 | 100 | 100 | 100 | 100 |
| High styrene SIS-1 | 50 | 20 | | | | |
| Calcium carbonate | 165 | 165 | 5 | 115 | 165 | 215 |
| Tackifier resin | 50 | 50 | 50 | 50 | 50 | 50 |
| Self-adhesion force (N/10 mm) | 12.66 | 12.19 | 12.84 | 12.8 | 10.4 | 10.9 |
| SUS-adhesion force (N/10 mm) | 0.2 | 0.3 | 3.3 | 1.5 | 0.4 | <0.1 |
| Probe tack (N/5mmφ) | 0.2 | 0.3 | 6.71 | 2.3 | 0.5 | 0.15 |
| Self-adhesion retention property (23°C, 1kg) | ○ | ○ | × | × | × | × |
| Self-adhesion retention property (40°C, 500 g) | Δ | Δ | × | × | × | × |
| Total evaluation | Δ | Δ | × | × | × | × |

### EXPLANATION OF SYMBOLS

1 Test piece (self-adhesion-type adhesive tape)
2 Portions of the test piece put together and stuck to each other
3 A loop portion of the test piece
4 Lifting bar
5 Weight

## Claims

1. A self-adhesion-type adhesive tape, which comprises a tape-shaped backing and an adhesive layer formed by applying an adhesive to one surface of the backing, wherein the elastomer of the adhesive contains a mixture of 10 to 80 wt% of a styrene-isoprene-styrene block polymer having a styrene content of at least 14 wt% and at most 19 wt%, and 20 to 90 wt% of a styrene-isoprene-styrene block polymer having a styrene content of at least 25 wt% and at most 50 wt%; the self-adhesion-type adhesive tape is formed to satisfy the following (a) and (b) at the same time:
(a) a self-adhesion-type adhesive tape having a width of 10 mm and a length of 100 mm is prepared, a self-adhesion-type adhesive tape with the same structure as the above self-adhesion-type adhesive tape having a length of 60 mm is stuck on the central 60 mm adhesive portion to make the portion non-adhesive while both end portions of 20 mm are left to be adhesive to prepare a test piece;
both adhesive end portions of 20 mm of the test piece are put together and stuck to each other to form a loop, a metallic lifting bar having a diameter of 15 mm is inserted into the loop to lift up the loop; and
a weight of 1,000 g is suspended from the loop, the loop is kept for 24 hours under the conditions of a temperature of 23°C and a relative humidity of 50%, and the number of test pieces from which the weight does not fall is at least 1/2, and
(b) a weight of 500 g is suspended from the loop of the above (a), the loop is kept for 24 hours under the conditions of a temperature of 40°C and a relative humidity of 75%, and the number of test pieces from which the weight does not fall is at least 1/2.

2. The self-adhesion-type adhesive tape according to Claim 1, wherein the adhesive contains 4 to 150 parts by weight of a tackifier resin and 1 to 230 parts by weight of a filler on the basis of 100 parts by weight of the elastomer.

3. The self-adhesion-type adhesive tape according to Claim 2, wherein the filler is contained in an amount of 75 to 215 parts by weight.

4. The self-adhesion-type adhesive tape according to Claim 1, wherein the self-adhesion-type adhesive tape has a SUS-adhesion force of less than 2.0 N/10 mm, a probe tack of less than 2.0 N/5 mm φ, and a self-adhesion force of at least 10.0 N/10 mm.

5. The self-adhesion-type adhesive tape according to Claim 1, wherein the adhesive contains 4 to 150 parts by weight of a tackifier resin and 1 to 230 parts by weight of fillers on the basis of 100 parts by weight of the elastomer; and the self-adhesion-type adhesive tape has a SUS-adhesion force of less than 2.0 N/10 mm, a probe tack of less than 2.0 N/5 mm φ, and a self-adhesion force of at least 10.0 N/10 mm.

6. The self-adhesion-type adhesive tape according to Claim 1, wherein the adhesive contains 4 to 150 parts by weight of a tackifier resin and 75 to 215 parts by weight of fillers on the basis of 100 parts by weight of the elastomer; and the self-adhesion-type adhesive tape has a SUS-adhesion force of less than 2.0 N/10 mm, a probe tack of less than 2.0 N/5 mm φ, and a self-adhesion force of at least 10.0 N/10 mm.

7. The self-adhesion-type adhesive tape according to Claim 1, wherein the elastomer contains a mixture of 20 to 70 wt% of a styrene-isoprene-styrene block polymer having a styrene content of at least 14 wt% and at most 19 wt%, and 30 to 80 wt% of a styrene-isoprene-styrene block polymer having a styrene content of at least 30 wt% and at most 50 wt%.

8. The self-adhesion-type adhesive tape according to Claim 1, wherein the adhesive contains 4 to 150 parts by weight of a tackifier resin and 1 to 230 parts by weight of fillers on the basis of 100 parts by weight of the elastomer; and the elastomer contains a mixture of 20 to 70 wt% of a styrene-isoprene-styrene block polymer having a styrene content of at least 14 wt% and at most 19 wt%, and 30 to 80 wt% of a styrene-isoprene-styrene block polymer having a styrene content of at least 30 wt% and at most 50 wt%.

9. The self-adhesion-type adhesive tape according to Claim 1, wherein the adhesive contains 4 to 150 parts by weight of a tackifier resin and 75 to 215 parts by weight of fillers on the basis of 100 parts by weight of the elastomer; and the elastomer contains a mixture of 20 to 70 wt% of a styrene-isoprene-styrene block polymer having a styrene content of at least 14 wt% and at most 19 wt%, and 30 to 80 wt% of a styrene-isoprene-styrene block polymer having a styrene content of at least 30 wt% and at most 50 wt%.

10. The self-adhesion-type adhesive tape according to Claim 1, wherein the adhesive contains 4 to 150 parts by weight of a tackifier resin and 1 to 230 parts by weight of fillers on the basis of 100 parts by weight of the elastomer; and the elastomer contains a mixture of 20 to 70 wt% of a styrene-isoprene-styrene block polymer having a styrene content of at least 14 wt% and at most 19 wt%, and 30 to 80 wt% of a styrene-isoprene-styrene block polymer having a styrene content of at least 30 wt% and at most 50 wt%; and the self-adhesion-type adhesive tape has a SUS-adhesion force of less than 2.0 N/10 mm, a probe tack of less than 2.0 N/5 mm φ and a self-adhesion force of at least 10.0 N/10 mm.

11. A plant-guiding self-adhesion-type adhesive tape as defined in Claim 2, wherein the filler contains at least 50 wt% of calcium carbonate and does not contain a softening agent.

12. A plant-guiding self-adhesion-type adhesive tape as defined in Claim 3, wherein the filler contains at least 50 wt% of calcium carbonate and does not contain a softening agent.
